# EUROPEAN PATENT APPLICATION

(11) **EP 1 924 096 A2**
(43) Date of publication of application: **21.05.2008**
(21) Application number: 07022309.4
(22) Date of filing: 16.11.2007
(51) Int. Cl.: H04N 7/18

(54) **Real time monitoring service providing system**

(30) Priority: 16.11.2006 KR 20060113134
(71) Applicant: LG - Nortel Co., Ltd., 679, Yeoksam-dong Gangnam-gu Seoul (KR)
(72) Inventor: Lee, Kum Young, Anyang-si Gyeonggi-do 430-708 (KR)
(74) Representative: Katérle, Axel

(57) **Abstract**

The present invention provides a real time monitoring service providing system. The system comprises: an emergency detection device (104) including a camera (102) to obtain monitoring information; at least one remote computer (106a,106b) connected to the emergency detection device via a network (114) to remotely control the emergency detection device; and a server computer (108) connected to the emergency detection device and the at least one remote computer via the network. The server computer is configured to determine whether the at least one remote computer is on a presence condition and maintains a list of the remote computers on the presence condition. The emergency detection device is configured to transmit a message including the monitoring information to each of the remote computers included in the list.

## Description

The present application claims priority from Korean Patent Application No. 10-2006-0113134 filed on November 16, 2006, the entire subject matter of which is incorporated herein by reference.

### BACKGROUND

### 1. Field

The present invention generally relates to a monitoring service providing system, and more particularly to a monitoring service providing system which enables a monitoring person to notice an emergency situation in real time by utilizing a Presence function and an Individual Multimedia Routing (IMR) function and supports a bidirectional communication between an emergency detection device and a remote monitoring device.

### 2. Background

A monitoring service providing system has been widely used in various situations in the recent years. Specially, in an office environment subject to emergency situations such as robberies, the monitoring service providing system has become an indispensable device. Conventionally, the monitoring service providing system transmits a video picture captured by a monitoring camera or a computer webcam arranged at a location of interest to a CCTV (closed circuit television) or DVR (digital video recorder) in a monitoring center. CCTV is a television system which transmits a signal from a monitoring video camera to a specific, limited set of monitors. CCTV differs from a broadcast television system in that the signal is not openly transmitted. DVR is a high resolution recording device that records a video signal in a digital format to a computer hard disk or DVD. DVR is typically used as part of a digital CCTV system, which converts an analog video signal inputted from a monitoring camera to a digital signal and stores the converted digital signal.

In a conventional analog CCTV monitoring system, each camera arranged at a location of interest continuously takes a video picture of its surroundings. The video picture from the camera is transmitted to a monitoring center. In the monitoring center, the received video signal is shown on a display panel and stored in a VTR (Video Tape Recorder). The display panel may be used as one full screen or a plurality of divisional screens.

In a conventional digital CCTV monitoring system (i.e., DVR system), various detection devices such as sensors and fire detection facilities, as well as numerous cameras, are included. In the DVR system, a signal inputted from the camera or detection devices is converted to a digital format and then outputted to a TV or a display panel in the monitoring center. In addition, the converted digital signal may be transmitted to remote places via a PSTN or Internet network. A monitoring computer equipped with a webcam may run a certain program to transmit monitoring information obtained by the webcam to a remote place via the Internet for enabling a monitoring person at the remote place to keep monitoring remotely.

As such, the conventional system supports a unidirectional transmission of the signal from the monitoring camera to the remote place. Thus, although a monitoring person at the remote place may notice an emergency situation around a distant camera, the monitoring person cannot timely respond to the emergency. Further, since the monitoring information is transmitted only to some fixed places, it cannot be ensured that the emergency will be timely warned when the monitoring person is not present.

Thus, it is necessary to provide an advanced monitoring service providing system adapted to eliminate any harm caused by a delayed response due to the unidirectional transmission and to enable the monitoring person to notice an emergency situation in real time regardless of his/her location.

### SUMMARY OF THE INVENTION

The present invention provides a mobile communication terminal and a wireless Internet access method performed with said terminal for providing an increased security for wireless Internet access. The mobile communication terminal accesses an Internet site with an instant key that has a modifiable value at each time and is issued by using authenticating information stored in the terminal.

According to one aspect of the present invention, there is provided a real time monitoring service providing system. The system comprises: an emergency detection device including a camera to obtain monitoring information; at least one remote computer connected to the emergency detection device via a network to remotely control the emergency detection device; and a server computer connected to the emergency detection device and the at least one remote computer via the network. The server computer is configured to determine whether the at least one remote computer is on a presence condition and maintains a list of the remote computers that are on the presence condition. The emergency detection device is configured to transmit a message of the monitoring information to each of the remote computers included in the list.

According to another aspect of the present invention, there is provided a real time monitoring service providing system. The system comprises at least one communication terminal and an emergency detection device including a camera to obtain monitoring information. The emergency detection device is configured to automatically create a phone call to the at least one communication terminal and transmit a message including the monitoring information to the at least one communication terminal by the created phone call.

According to yet another aspect of the present invention, there is provided another real time monitoring service providing system. The system comprises: an emergency detection device including a camera to obtain monitoring information; at least one communication terminal; and at least one remote computer operable to establish a bidirectional communication with the emergency detection device. The emergency detection device is configured to transmit a message including the monitoring information to the at least one remote computer or the at least one communication terminal on the basis of a predetermined condition. The at least one remote computer is configured to transmit an instruction of replaying a warning beep to the emergency detection device and the emergency detection device receiving the instruction is operable to replay a stored warning beep.

### BRIEF DESCRIPTION OF THE DRAWINGS

Arrangements and embodiments may be described in detail with reference to the following drawings in which like reference numerals refer to like elements and wherein:

Fig. 1 is a schematic diagram illustrating an entire structure of a monitoring system according to one embodiment of the present invention;

Figs. 2A and 2B illustrate a user interface screen used to control an emergency detection computer according to one embodiment of the present invention;

Figs. 3A and 3B illustrate a user interface screen used to control a remote computer according to one embodiment of the present invention;

Fig. 4 is a flow chart showing monitoring operations performed by the monitoring system illustrated in Fig. 1.

### DETAILED DESCRIPTION OF THE PRESENT INVENTION

A detailed description may be provided with reference to the accompanying drawings. One of ordinary skill in the art may realize that the following description is illustrative only and is not in any way limiting. Other embodiments of the present invention may readily suggest themselves to such skilled persons having the benefit of this disclosure.

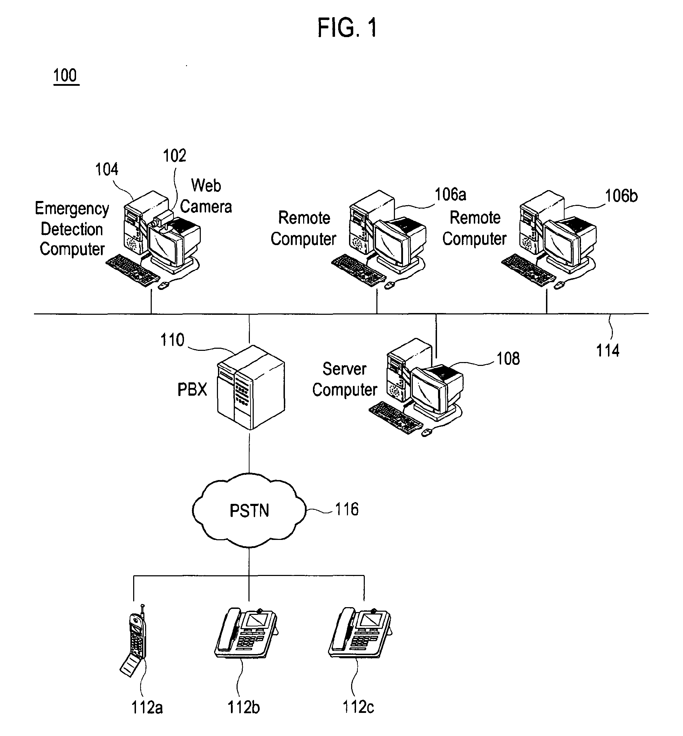

Certain embodiments of the present invention will be explained below with reference to Figs. 1 to 4.

Fig. 1 is a schematic diagram illustrating an entire structure of a monitoring system according to one embodiment of the present invention.

As illustrated in Fig. 1, a monitoring system 100 comprises an emergency detection computer 104, remote computers 106a, 106b, a server computer 108, a PBX 110, terminal units 112a-112c, a network 114 and a PSTN 116. The emergency detection computer 104 includes a motion detectable web camera 102. The remote computers 106a, 106b may control the operations of the web camera 102 and the emergency detection computer 104 and may remotely monitor the surroundings around the computer 104. The server computer 108 keeps determining whether each of the remote computers 106a, 106b is on a presence condition and informs the emergency detection computer 104 of the determined result. When an emergency situation is detected by the emergency detection computer 104, the PBX 110 may be used to transmit a warning message of the emergency detection. The terminal units 112-112c may respectively receive the warning message of the emergency detection via the PBX 110 and the PSTN 116. The monitoring system 100 may further include a speaker (not shown) used to replay a voice message. The voice message may work as a first defense against a situation where the web camera 104 on the emergency detection computer 104 detects a motion.

The emergency detection computer 104 may record a video picture captured by the web camera 102. According to the environmental configurations, if the motion detectable web camera 102 detects a motion, then the emergency detection computer 104 may transmit a warning message to some of the remote computers, each of which is determined as being available (i.e., being at the presence condition), on the basis of the setting environment. Alternatively, if the motion detectable web camera 102 detects a motion, then the emergency detection computer 104 may transmit the warning message to the terminal units 112a-112c via the PBX 10 and the PSTN 116.

The remote computers 106a, 106b are connected to both the emergency detection computer 104 and the server computer 108 via the network 114. The remote computers 106a, 106b may control and monitor the emergency detection computer 104. Further, each of the remote computers 106a, 106b may receive the warning message of the detected motion from the emergency detection computer 104. The remote computers 106a, 106b may receive the video picture captured by the web camera 102 to display and record the video picture. According to one embodiment of the present invention, each of the remote computers 106a, 106b may be connected to the emergency detection computer 104 and the server computer 108 via a LAN. Alternatively, each of the remote computers 106a, 106b may be connected to the emergency detection computer 104 and the server computer 108 via anther type of network such as an Internet. Although only two remote computers are illustrated in Fig. 1, additional remote computers may be connected to the emergency detection computer 104 and the server computer 108 via the network 114. Moreover, the remote computers 106a, 106b may access the emergency detection computer 104 by a manual operation to operate the web camera 102 and monitor the surroundings through the web camera 102.

As mentioned above, the server computer 108 may be connected to the remote computers 106a, 106b and the emergency detection computer 104 via the network 114. By utilizing the Presence function, the server computer 108 continues to determine whether each of the remote computers 106a, 106b is available and maintains a list, which comprises all of the remote computers determined as being on the presence condition (i.e., as being currently available). When the web camera 102 detects a motion, the emergency detection computer 104 (while referring to the list) may transmit a warning message to the currently available remote computers by way of an instant messaging.

Alternatively, when the web camera 102 detects a motion, the emergency detection computer 104 may create a phone call to each of the terminal units 112a-112c via the server computer 108 and the PBX 110 by utilizing an IMR function and an automatic call creation function. Then, the emergency detection computer 104 may transmit the warning message to each of the terminal units 112a-112c by the created phone call. As described above, when transmitting the warning message by the phone call to the terminal units, the PBX 110 mediates the phone call transmission between the server computer 108 and the PSTN 116. As illustrated in Fig. 1, the phone call is transmitted to the terminal units 112a-112c via the PBX 110 and the PSTN 116. Alternatively, the phone call may be transmitted via other types of network connected to the PBX 110 such as an Internet.

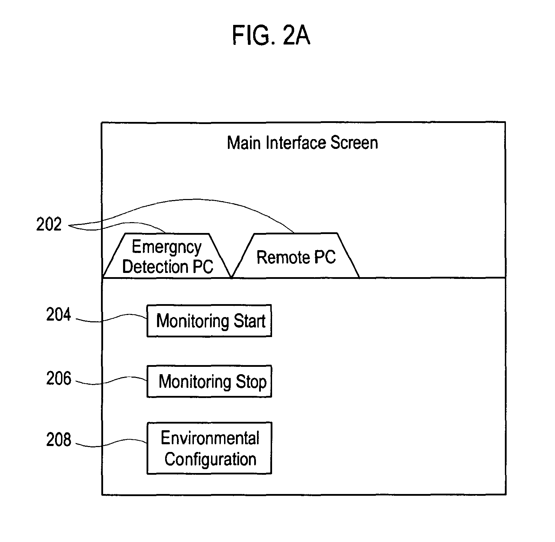

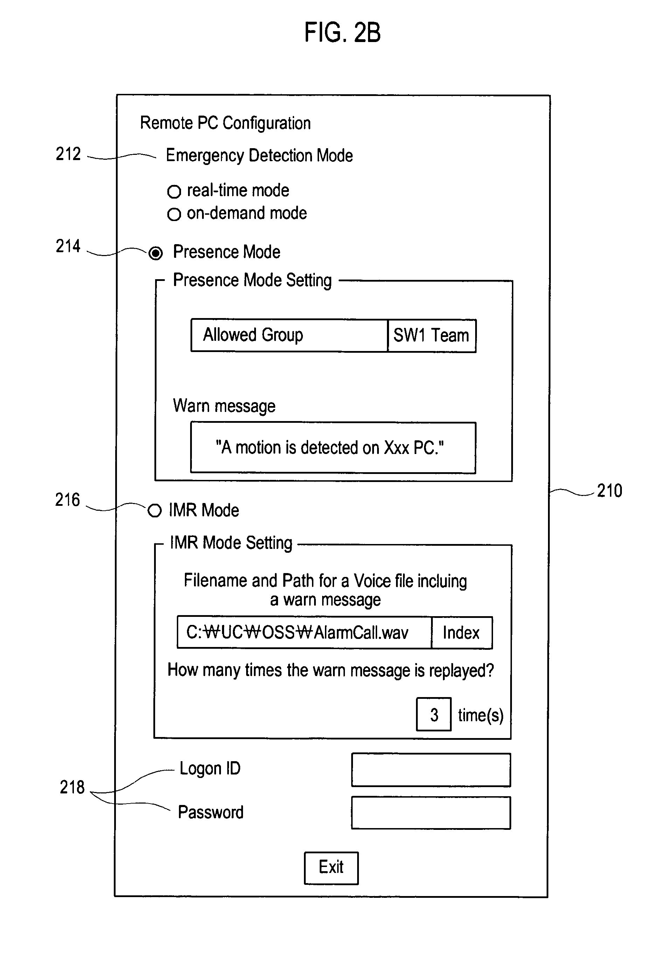

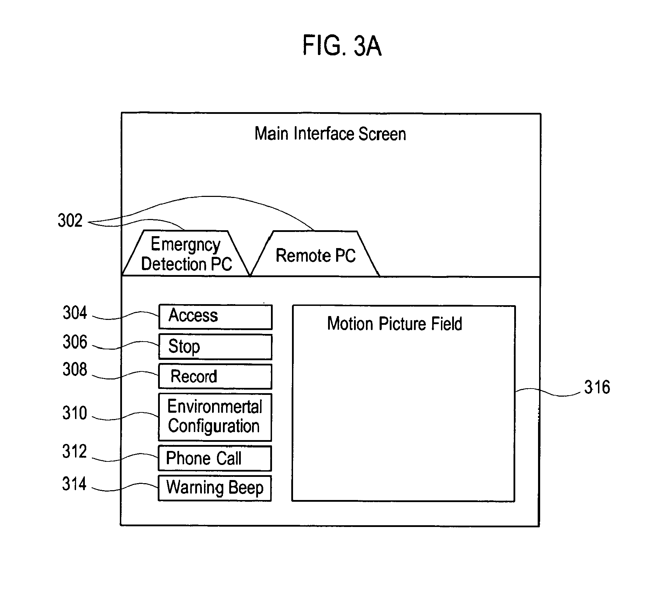

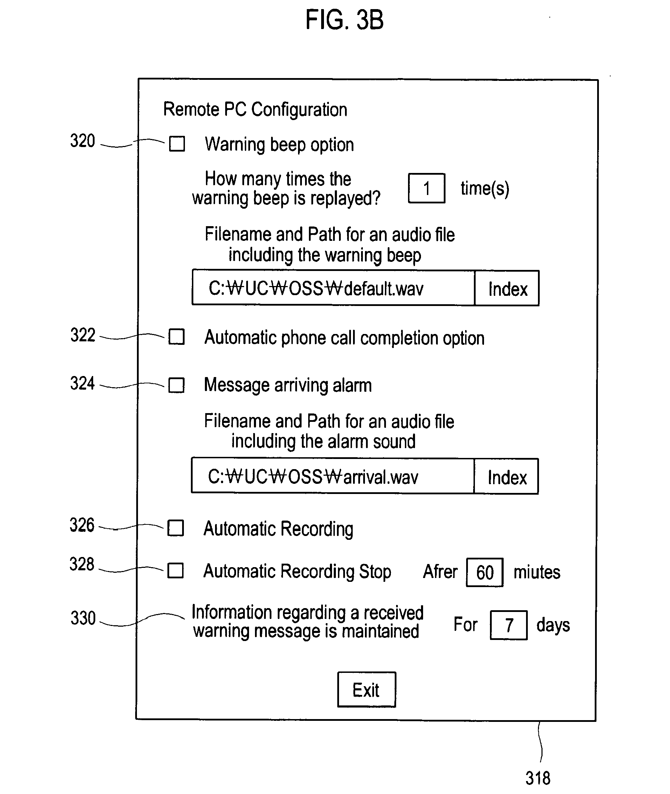

Figs. 2 and 3 respectively illustrate user interface screens used to control the emergency detection computer or a remote computer according to one embodiment of the present invention.

As illustrated in Figs. 2A and 3A, a selection part 202, 302 used for selecting one of the emergency detection computers and remote computers is shown on the upper side of the screen. According to the selection, a main interface screen for the emergency detection computer (*see* Fig. 2A) or a main interface screen for the remote computer (*see* Fig. 3A) may be displayed on the lower side of the selection part 202, 302. According to one embodiment of the invention, the user interface screen may be displayed on a display panel of one remote computer. In such a case, the remote computer may remotely control the emergency detection computer and other remote computers by the user interface screen illustrated in Figs. 2 and 3. Although the selection part 202, 302 illustrated in Figs. 2 and 3 provides an option of one emergency detection computer or one remote computer, the selection may be made among additional emergency detection computers and remote computers.

Referring to the main interface screen for the emergency detection computer in Fig. 2A, three buttons are shown. Theses buttons include a monitoring start 204, a monitoring stop 206 and an environmental configuration 208. If the monitoring start 204 is selected, then the web camera 102 of the emergency detection computer begins the emergency detection. If the monitoring stop 206 is selected, then the web camera 102 stops the emergency detection.

If the environmental configuration 208 is selected, then a screen 210 used for setting the environmental configuration of the emergency detection computer is popped up (*see* Fig. 2B). On the pop up screen 210, there are an emergency detection mode field 212, a warn message transmission mode field 214, 216 and a remote authentication field 218 including a remote logon ID and password.

At the emergency detection mode field 212, a real-time mode or an on-demand mode may be selected. If a real-time mode is selected, then the web camera 102 of the emergency detection computer keeps an "ON" condition. Each time the web camera 102 detects a motion, the warning message is transmitted to the remote computer or the terminal units according to a selected message transmission mode. If an on-demand mode is selected, then the web camera 102 of the emergency detection computer may be turned on when the remote computer accesses the emergency detection computer 104 and turns on the web camera 102.

After selecting the emergency detection mode, a Presence mode 214 or an IMR mode 216 may be selected for the warn message transmission mode. If the presence mode 214 is selected, then a group of remote computers allowed to receive the warning message (e.g. SW1 team) may be entered together with a warning message (e.g., "A motion is detected on Xxx PC."). In such a case, when the web camera 102 on the emergency detection computer 104 detects a motion, an instant message window is popped up on a display panel of each remote computer, which is determined as being currently available by the server computer, in the group. On the instant message window, the entered warning message is displayed. If the IMR mode 216 is selected, then a filename and a path for a voice file including a warning message (e.g., C:/UC/OSS/AlarmCall.wav) may be entered. The filename and the path for the voice file may be entered directly or entered by using an index button. If the web camera 102 on the emergency detection computer 104 detects a motion, then a phone call is automatically created to each of the terminal units registered in the system via the PSTN 116. Then, the voice file obtained from the entered path is transmitted to each of the terminal units by the phone call. According to one embodiment of the invention, in the IMR mode, how many times the warning message is replayed (e.g., three times) by the phone call may be selected.

After selecting the warn message transmission mode, a certain logon ID and password may be entered on the remote authentication field 218. The ID and the password are used for authenticating in the manual access from the remote computers. When a remote computer tries to access the emergency detection computer, the remote computer must be authenticated by entering the ID and the password. When clicking an exit button, all the selected configurations are stored and the popup window 210 disappears.

Next, the screen for the remote computer in Fig. 3 is discussed. In Fig. 3A, there are six buttons, i.e., an access button 304, a stop button 306, a record button 308, an environmental configuration button 310, a phone call button 312 and a warning beep button 314. When selecting the access button 304 or the stop button 306, an access to the emergency detection computer is connected or disconnected from the remote computer. When the remote computer is connected to the emergency detection computer 104, a motion picture field 316 on the screen shows a video picture from the web camera of the emergency detection computer 104. When selecting the record button 308, the video picture is recorded in the remote computer. While the remote computer keeps an access to the emergency detection computer and monitors the surroundings thereof, it is possible to create a phone call, if necessary, between the emergency detection computer and the remote computer by selecting the phone call button 312. If the warning beep button 314 is selected, then a previously recorded warning beep is replayed on the emergency detection computer 104.

If the environmental configuration button 310 is selected, then a screen 318 used for setting the environmental configuration of the remote computer is popped up (*see* Fig. 3B). On the pop up screen 318, there is a warning beep option field 320. If the warning beep option field 320 is selected, then the warning beep will be automatically replayed on the emergency detection computer when the remote computer accesses the emergency detection computer. After selecting the option field 320, how many times the warning beep would be replayed (e.g., one time) may be entered. A filename and a path for an audio file including the warning beep (e.g., C:/UC/OSS/default.wav) may be also entered on the screen 318. The filename and the path for the audio file may be entered directly or entered by using an index button.

On the pop up screen 318, there is also an automatic phone call completion option field 322. If the option field 322 is selected, then the phone call to the remote computer would be automatically hung up after completing the warning beep replay.
Further, there is a message arriving alarm field 324. If the message arriving alarm field 324 is selected, then a predetermined alarm is replayed when the remote computer receives the warning message from the emergency detection computer. After selecting the alarm field 324, a filename and a path for an audio file including the alarm sound (e.g., C:/UC/OSS/arrival.wav) may be also entered on the screen 318. The filename and the path for the audio file may be entered directly or entered by using an index button.

In addition, there are an automatic recording start field 326 and an automatic recording stop field 328. If the automatic recording start field 326 is selected, then the recording is enabled automatically when the remote computer accesses the emergency detection computer 104. The automatic recording stop field 328 indicates how long the recording continues (e.g., 60 minutes). Information regarding the received warning message may be maintained during a period entered in the field 330. When clicking an exit button, the popup window 318 disappears.

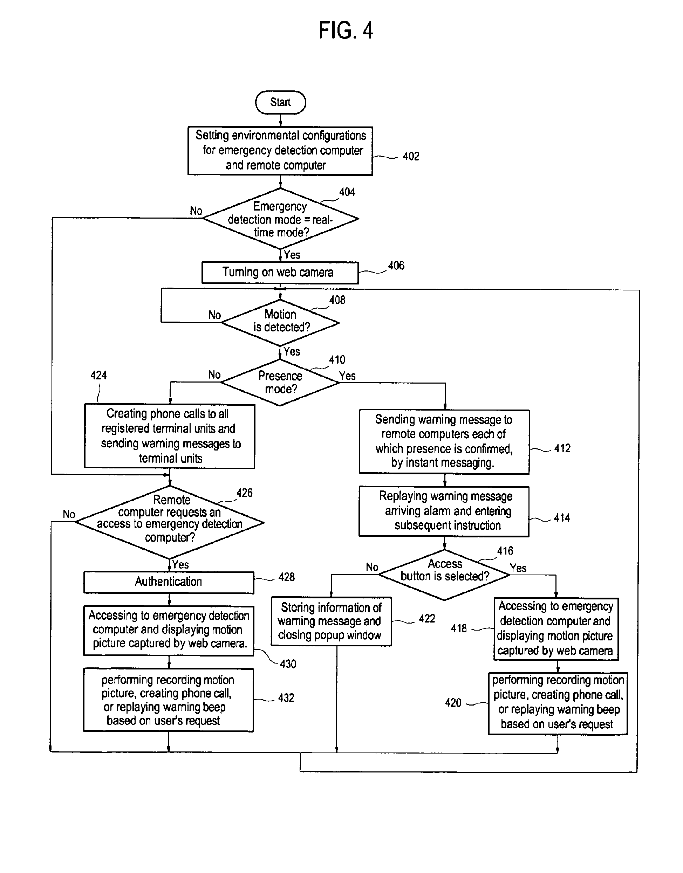

Fig. 4 is a flow chart showing the monitoring operations performed by the monitoring system illustrated in Fig. 1.

First, at operation 402, environmental configurations for the emergency detection computer 104 and the remote computers 106a, 106b are set by utilizing the interface screens illustrated in Figs. 2 and 3. In the interface screen 210 for the emergency detection computer 104 in Fig. 2B, the emergency detection mode and the warn message transmission mode must be certainly set. Further, the remote authentication field 218 must be filled with a logon ID and a password. Each field in the interface screen 318 for the remote computer in Fig. 3B is optional.

At operation 404, it is determined whether the emergency detection mode is a real-time mode. If so, the web camera 102 of the emergency detection computer 104 is turned on and starts monitoring at operation 406. Next, at operation 408, it is determined whether the web camera 102 detects a motion. In such a case, it is determined whether the warn message transmission mode is the Presence mode or the IMR mode at operation 410. If the Presence mode, then the warning message is sent to the remote computers, each of which the presence is confirmed by the server computer 108 (i.e., each of the remote computers is currently available), and an instant message window is popped up on each of the available remote computers at operation 412. At operation 414, according to the environmental configuration of each remote computer receiving the warning message, the warning message arriving alarm may be replayed on the remote computer.

At operation 416, it is determined whether the access button in the interface screen 316 is selected. If so, an access to the emergency detection computer from the remote computer is connected and the motion picture captured by the web camera 102 is displayed on the motion picture field 316 of the remote computer at operation 418.

Next, according to a user's request on the remote computer, the motion picture may be recorded, a phone call may be created to the emergency detection computer or a warning beep may be replayed at operation 420.

At operation 416, if the access button is not selected, then information regarding the warning message such as a receiving date, a receiving time, etc. is stored and the instant message window disappears at operation 422.

At operation 410, if the warning message transmission mode is determined as an IMR mode, then phone calls to all the registered terminal units are automatically created and the warning messages are respectively sent to the terminal units by the IMR function at operation 424. Then, the created phone call may be connected to a home phone terminal or an office phone terminal via the PBX 110 and the PSTN 116, or may be transmitted to a mobile terminal or PDA via a mobile communication network. A user receiving the warning message on the remote computer may try to access the emergency detection computer 104.

At operation 426, it is determined whether the remote computer requests an access to the emergency detection computer 104. If so, an authentication procedure is performed at operation 428. In the authentication, it may be requested to enter the remote access ID and password on the interface screen of the remote computer. When the access is accepted, the access to the emergency detection computer from the remote computer is connected and the motion picture captured by the web camera 102 is displayed on the motion picture field 316 of the remote computer at operation 430. Next, according to a user's request on the remote computer, the motion picture may be recorded, a phone call may be created to the emergency detection computer or a warning beep may be replayed at operation 432.

At operation 404, if the emergency detection mode is determined as an on-demand mode, then the procedure continues to operation 426 and the subsequent operations are performed.

Although the present invention has been described with reference to a number of preferred embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A real time monitoring service providing system, comprising:
an emergency detection device including a camera to obtain monitoring information;
at least one remote computer connected to the emergency detection device via a network to remotely control the emergency detection device; and
a server computer connected to the emergency detection device and the at least one remote computer via the network,
wherein the server computer is configured to determine whether the at least one remote computer is on a presence condition and maintains a list of the remote computers on the presence condition, and
wherein the emergency detection device is configured to transmit a message including the monitoring information to each of the remote computers included in the list.

2. The monitoring system of Claim 1, wherein the message is transmitted by way of an instant messaging.

3. The monitoring system of Claim 1, wherein the remote computers receiving the message is configured to access the emergency detection device via the network and performs at least one response action remotely.

4. The monitoring system of Claim 3, wherein the response action includes displaying a motion picture from the camera, recording the monition picture, replaying a warning beep, creating a phone call to the emergency detection device and recording information regarding the message.

5. A real time monitoring service providing system, comprising:
at least one communication terminal; and
an emergency detection device including a camera to obtain monitoring information,
wherein the emergency detection device is configured to automatically create a phone call to the at least one communication terminal and transmit a message including the monitoring information to the at least one communication terminal by the created phone call.

6. The monitoring system of Claim 5, further comprising at least one remote computer connected to the emergency detection device via a network,
wherein, after the transmission of the message, the remote computer is configured to access the emergency detection device via the network and perform at least one response actions remotely, and
wherein the access from the remote computer to the emergency detection device is established through an authentication procedure.

7. The monitoring system of Claim 6, wherein the response actions includes displaying a motion picture from the camera, recording the monition picture, replaying a warning beep and creating a phone call to the emergency detection device.

8. A real time monitoring service providing system, comprising:
an emergency detection device including a camera to obtain monitoring information;
at least one communication terminal; and
at least one remote computer configured to establish a bidirectional communication with the emergency detection device;
wherein the emergency detection device is configured to transmit a message including the monitoring information to the at least one remote computer or the at least one communication terminal on the basis of a predetermined condition,
wherein the at least one remote computer is configured to transmit an instruction of replaying a warning beep to the emergency detection device and the emergency detection device receiving the instruction is configured to replay a stored warning beep.
